# EUROPÄISCHE PATENTSCHRIFT

(11) **EP 0 494 330 B1**
(45) Veröffentlichungstag und Bekanntmachung des Hinweises auf die Patenterteilung: **14.06.1995**
(21) Anmeldenummer: 91100300.2
(22) Anmeldetag: 11.01.1991
(51) Int. Cl.: B23K 7/10

(54) **Brennschneidmaschine mit massenstromgesteuerter Versorgung des Schneidbrenners**
Oxygen cutting machine with a controlled supply of a gas mass flow to the cutting torch
Machine d'oxycoupage avec contrôle de débit massique de gaz d'alimentation du chalumeau coupeur

(43) Veröffentlichungstag der Anmeldung: 15.07.1992
(73) Patentinhaber: HORST K. LOTZ Feuerschutzbaustoffe, D-65719 Hofheim (DE)
(72) Erfinder: Lotz, Horst K., W-6238 Hofheim-Wallau (DE); Lotz, Mattias, W-6200 Wiesbaden-Delkenheim (DE); Manning, Glyndwr, Burton-on-Trent, Staffordshire (GB)

(56) Entgegenhaltungen:
- EP-A- 0 188 763
- US-A- 4 439 249

## Beschreibung

Beim Brennschneiden, Flämmen, Heizen und ähnlichen Verfahren unter Verwendung einer Heizgasflamme, in der ein Gemisch von Sauerstoff oder Luft mit einem Brenngas verbrannt wird, kommt es durch Verschmutzen der Brenndüsen oder vorgeschalteter Sicherheits-, Meß- oder anderer gasführender Teile zur Verengung von Querschnitten und damit zur Verringerung von Gasmengen und folglich zur Schwächung der gewünschten Heizflammenstärke. Umgekehrt kann eine verschleißende Aufweitung von Durchfluß- oder oder Austrittsquerschnitten zu einer Erhöhung von Durchfluß und Heizleistung führen. Dieser Umstand verlangt ein häufiges Nachstellen der Heizflammenmedien vorzugsweise in Düsennähe, um einen sicheren und leistungsstarken Betrieb zu erzielen. Zum einen ist aber die Zugängigkeit, bedingt durch Umgebungs- und bauliche Umstände - zum Beispiel beim Brennschneiden heißer Werkstücke aus Stahl - durch lange, nicht unterbrechbare Betriebszeiten sehr eingeschränkt, zum anderen ist ein häufiges Nachstellen von Druckminderern und Ventilen arbeitsaufwendig und fehleranfällig.

Es sind Systeme oder Verfahren bekannt, mit denen die gewünschten Betriebsumstände der gasbetriebenen, heizflammenerzeugenden Geräte, je nach Arbeitsaufgabe und Vorgabe, automatisch geregelt oder nachgesteuert werden, insbesondere wenn auch die Anzahl der Heizflammendüsen im Betrieb veränderlich ist. Kennzeichnend für diese Systeme ist die elektronische Messung von Mediendaten und ihre Verarbeitung in Rechnern oder ähnlich zum regelnden Eingriff durch Verstellung, Zu- und Abschaltung von Steuergeräten, wie zum Beispiel in der US-A-4439 249 und in der EP 0188 763.
beschrieben. Der dazu betriebene Aufwand ist sehr umfangreich, sehr kostspielig und erhöht die Störanfälligkeit der Anlagen.

Im Gegensatz dazu beansprucht die vorliegende Erfindung gemäß dem Anspruch 1 durch Nutzung praxisentsprechender Umstände und in Versuchen gewonnener Erkenntnisse mit kostengünstiger Erweiterung vorhandener Geräte eine einfache, wenn auch begrenzte, Selbstätigkeit in der Versorgungssteuerung für leistungsstarke Heizflammen oder ähnliche Gasaustrittsumstände aus Düsen zu bewirken.
1. Da man bisher in vielen Fällen eine Gasversorgung, z. B. zum Brennschneiden oder Flämmen, wirtschaftlich von Hand einstellte, um eine mehr oder minder gute Heizflamme zu erzielen, nahm man, je nach Erfahrung und Ausbildung des Personals, gewisse Abweichungen von der optimalen Einstellung in Kauf.
   Eine Verringerung der Einstellvorgänge erlaubt leichter eine Einstellung von qualifiziertem Personal mit besserem Ergebnis als Ausgangsbasis vornehmen zu lassen.
2. Der gesamte Veränderungsbereich bis zum Reinigen oder Austausch der Düsen oder entsprechender Geräte liegt je nach Anlagenart bei etwa ±20 % der vollen Heizleistung, ohne daß eine ungewollte Betriebsunterbrechung erzwungen wird.
3. Durch einen Überschuß an Heizgas kann die Heizleistung der Heizflamme nicht oder kaum erhöht werden, umgekehrt aber durch einen Heizsauerstoff bzw. Luftüberschuß.
4. Eine Ein- oder Nachstellung in Düsennähe vermeidet abstands- oder zeitbedingte Über- und Untersteuerungen und erlaubt kleinste Nachstellschritte.
5. Der Massenstrom in einem System ist konstant. Veränderungen des Austrittsquerschnittes führen daher zu Druckerhöhungen und Druckminderungen mit ensprechenden Verminderungen und Erhöhungen der Strömungsgeschwindigkeiten in den verschiedenen Querschnitten an und vor der Düse, damit fallen und steigen die Reibungsverluste in den Zuführungsleitungen und die Stoßverluste an den Verengungen. Das heißt bei gleichem Massenstrom sinkt bespielsweise die Geschwindigkeit wenn der Druck im Medium ansteigt, und der Energiegewinn durch verringerten Reibungsverlust erzwingt eine höhere Austrittsgeschwindigkeit.
6. Bei einem ausreichend hohen Vordruck kann man mit einem, im Durchgangsquerschnitt dem ungefähren Mengenbedarf entsprechenden, genauestens einstellbaren Massenstromhahn geeigneter Ausführung einen genauen und dann nur schwer vom Austritt her beeinflußbaren Massenstrom einstellen.

Da im Rahmen betriebserlaubter Abweichungen und im Einstellbereich liegend, sind genauere Festlegungen und Berechnungen nach den anerkannten Regeln der Strömungslehre und Gasdynamik nicht erforderlich.

Gemäß einer Ausführungsform dieser Erfindung besteht der Massenstromhahn, der auf die Gassteuereinheit gemäß WO-A- 88/00317 hinter deren Druckmindereranteil und vor deren Magnetventil gesetzt wird, aus einem Gehäuse 1 mit einem Einlauf 2 in eine untere Hahnkammer 3, die mit einer Hahnmembran 4 versehen mit einer Ausgleichsöffnung 5 von der oberen Hahnkammer 6 getrennt ist. Darüber sitzt eine Dichtmembran 7, um das Zwischengehäuse abzudichten.

In der Hahnöffnung 10 sitzt verstell- und querschnittsveränderlich das Hahnstück 11, das an der Membranverschraubung 13 mit Dichtplatte 12 und Feder 14 befestigt ist. Auf dieser drückt die Einstellspindel 15 mit einem Handrad 16 versehen und zum genauen Einstellen mit einem Einstellzeiger 17 und einer Einstellskala 18 ausgestattet. Ein Ventilkanal 19 verbindet mit dem Magnetventil 20, von dort kann über einer Dosierscheibe 21 ein Medium durch die Ventilableitung 22 in den Abfluß 23 zur Düse hin fließen. Der Wirkungsablauf beispielsweise einer Heizsauerstoffsteuerung bzw. -regelung für einen Schneidbrenner mittels eines erfindungsgemäßen Massenstromhahns ist wie folgt:

Aus einem Druckminderer fließt Sauerstoff mit hohem Druck z. B. 1000 KPA (= 10 bar) über den Zufluß 2 in die untere Hahnkammer 3 von dort durch die Ausgleichsöffnung 5 der Hahnmembran 4 in die obere Hahnkammer 6 und von dort über den Ventilkanal 19 gegen das geschlossene Magnetventil im Magnetventilsitz 20, ein Druck bis auf den Eingangsdruck z. B. 1000 KPA (= 10 bar) baut sich in der oberen Hahnkammer 3 auf und die Feder 14 drückt die Membranverschraubung 13 mit der Dichtplatte 12 auf die Hahnöffnung 10. Das System ist geschlossen. Ein gewünschter Massenstrom (Menge x Druck) entsprechend einer gewünschten Verbrauchsmenge wird mittels des Handrades 16 und der Spindel 15 durch Freigabe eines kleinen Weges der Feder 14 zwischen der Spindel 15 und der Membranverschraubung 13 eingestellt und angezeigt nach und mit dem Einstellzeiger 17 und der Einstellskala 18. Hier kann der Volumenstrom beim ursprünglichen Einjustieren auch beim strömendem Medium noch nachgestellt werden.

Zum Betriebs- oder Einstellbeginn wird das Magnetventil im Magnetventilsitz 20 geöffnet, über eine Ventilableitung 22 und durch eine Dosierscheibe 21 fließt der 1000 KPA (= 10 bar) Heizsauerstoff aus der oberen Hahnkammer 6 ab, gerade soviel schneller, um über dem Nachströmen durch die Ausgleichsöffnung 5 der Hahnmembran 4 zu bleiben. Somit hebt der weitgehend konstante Druck des Heizgases oder des Heizsauerstoffes die Membranen 4 und 7 die Membranverschraubung 13 mit dem Hahnstück 11 um das eingestellte Maß an, und ein entsprechender Fluß erfolgt durch den Ringkanal zwischen Hahnöffnung 10 und Hahnstück 11 und durch einen Teil der sich zunehmend vergrößernden Fenster im Zylindermantel des Hahnstücks 11, einem theoretischen Einstelldruck von etwa -250 KPA (= -2,5 bar) entsprechend. Über die Abflußleitung 23 fließt der Sauerstoff zum Verbraucher z. B. einer Heizdüse, hin.

Verringert sich nun der Ausfluß des Gases aus der Düse oder ähnlich teilweise durch Verstopfung, so baut sich in der Zuflußleitung zur Düse ein Rückstaudruck auf, der, je nach Verstopfung, sich vielleicht einen Druck entsprechend einem theoretischen Einstelldruck von 270 KPA (= 2,7 bar) aufbaut, der gemäß 5. der vorbeschriebenen physikalischen Umstände eine nun geringere Strömungsgeschwindigkeit zufolge hat und damit auch geringere Reibungsverluste, das gilt auch für die Stoßverluste bei plötzlichen Querschnittsverlusten am Düseneinlauf, im Verlauf der Zuflußleitung und auch im Massenstromhahn. Damit besteht auch ein höherer Mediendruck am verengten Düsenaustritt, der in gewissen Grenzen keine praktisch meßbare Rückwirkung durch den relative hohen Vordruck vor dem Massenstromhahn hat und zu einer höheren Ausströmgeschwindigkeit durch die verengte Düse und damit zu etwa gleichem Mengenaustritt wie zuvor bei noch unverengter Düse führt.

In den Massenstromhahn (1-23) fließt bei einer gewählten Einstellung die einströmende Gasemasse definiert durch Menge und Druck durch eine veränderbare Hahnöffnung (10) über die Abflußleitung (23) zum Verbraucher. Der zu schnelle oder gestaute Abfluß am Verbraucher bewirkt, daß der über eine Dosierscheibe (21) sich verändernde Druck in der oberen Hahnkammer (6) eine selbsttätige, gegensteuernde, geringfügige Veränderung der Hahnöffnung (10) und damit einen Ausgleich der Druckveränderung in der Abflußleitung ergibt. Damit bleibt die anströmende Masse, d.h. das Produkt aus Menge und Druck, etwa gleich.

Bei zu starker Verringerung des Düsenquerschnittes kann bei ausreichend hohem Vordruck eine zu hohe Ausströmgeschwindigkeit auftreten, die die Flamme, d.h. den Verbrennungsort der gemischten Gase Heizgas und Heizsauerstoff, zu weit von der Düse wegverlegt, eine Vermischung mit Umgebungsluft verstärkt bis die Flamme ausgeht; die Heizflamme wird ausgeblasen. Bei zu geringem Vordruck kann ein zu starker Staudruck in dem Vordruckteil d.h. in einen vorgeschalteten Druckmindererteil, z.B. den der oben angeführten Steuereinheit, merkbar hineinwirken, was zur typischen Reaktion eines Druckminderers, nämlich zur Verringerung seines Durchgangs mit einem nachfolgend geringeren Druck, und somit zur Verstärkung der Wirkung der sich verengenden Düse, d.h. zu einem schwächeren Mengenangebot, führt.

Je nach Gasart und Druckbereich sind zur optimalen Wirkung des Massenstromhahnes das Hahnstück 11, vielleicht auch die Dosierscheibe 21 und die Feder 14, auszuwählen. Am einfachsten geschieht dies bis zur Vorlage der umfangreichen Berechnungen für alle beteiligten Leitungen und Querschnitte durch empirische Festlegungen und Versuche.

Nachdem erfindungsgemäß ein relativ hoher Vordruck vor einem Massenstromhahn gute und sichere Mengengleichheit am Austritt z. B. einer Düse in ausreichend weitem Bereich sicherstellt, ist es möglich, das gleiche Medium mit einem höheren Arbeitsdruck dafür zu verwenden. Beim Brennschneiden kann ein Teil des Schneidsauerstoffes mit einem Arbeitsdruck von 600 - 2000 KPA (= 6 - 20 bar) vorzugsweise bei 1000 - 1200 KPA (= 10 - 12 bar) bei ausreichendem Mengenangebot auch als Versorgung für den Massenstromhahn zur Verwendung als Heizsauerstoff vorgesehen werden. Kosten- und platzsparend kann damit beim Einsatz von Druckminderern für einen noch höheren Versorgungsdruck als den Schneidsauerstoff-Arbeitsdruck auf einen besonderen Druckminderer für den Heizsauerstoff verzichtet werden. Das bedeutet, daß eine vorhandene Steuereinheit mit Druckminderer für Schneidsauerstoff mit einem doppelten Ausgang und der zweite davon auch mit einem Massenstromhahn für Heizsauerstoff versehen wird.

Natürlich lassen sich eine oder mehrere Düsen über einen Massenstromhahn mit Heizgas sicher und mengengleich versorgen. Da aber der Heizleistungseinfluß einer höheren Gasmenge gegenüber Heizsauerstoff unbedeutend ist, kann von vornherein mit einem Heizgasüberschuß gearbeitet werden, der durch eine Querschnittsverengung in Düse oder vorgeschalteter Rückbrennsicherung erst nach normal zurückgeführt wird und so ebenfalls über längere Betriebszeit keine Nachstellung des Mengenstroms über einen Druckminderer braucht. Hinzu kommt, daß Düsen mit Injektorprinzip durch den Heizsauerstoff einen Sog ausüben, dessen Wirkung umso größer wird, je weniger Heizgas zufließt.

Auch der Einsatz größerer Querschnitte und Versorgungsanlagen hat Vorteile für eine Mengengleichheit am Austritt, weil eine Veränderung wenig schnell im Druck eine verringernde oder verstärkende Wirkung in einem Druckminderersystem zufolge hat. So wie auch mehrere Geräte über Ringleitungen und mehrere Druckminderer besser versorgt werden können, was Druck- und Mengenveränderung durch Zu- und Abschaltungen betrifft, so kann dies jetzt durch Verwendung eines Massenstromhahnes noch günstiger bei geringem Mehraufwand erreicht werden.

Der Wegfall von Zuleitungen und Druckminderern für Heizsauerstoff gleicht den Mehraufwand für einen Massenstromhahn mehr als aus. Die Vorteile durch weniger Betriebspausen, Betriebsstörungen und Wartungsaufwand bei längeren Wartungsintervallen sind jedoch entscheidend. Eine insgesamt erzielte bessere Betriebsruhe in diesem Bereich gibt bessere Produktionsvoraussetzungen der doch insgesamt komplizierten Anlagen.

Abschließend ist zu vermerken, daß durch Druckmessung und -schreibung mit Grenzwertsignal des Staudruckzustandes vor den Düsen eine gute Möglichkeit für eine laufende Zustandskontrolle und rechtzeitige bzw. vorsorgende Wartung sind, im Störfall aber auch leicht und schnell die Störquelle einkreisen helfen.

### Legende

- 1: Gehäuse
- 2: Einlauf
- 3: untere Hahnkammer
- 4: Hahnmembran
- 5: Ausgleichsöffnung
- 6: obere Hahnkammer
- 7: Dichtmembran
- 8: Zwischengehäuse
- 9: Gehäusedeckel
- 10: Hahnöffnung
- 11: Hahnstück
- 12: Dichtplatte
- 13: Membranverschraubung
- 14: Zwischenstück
- 15: Einstellspindel
- 16: Handrad
- 17: Einstellzeiger
- 18: Einstellskala
- 19: Ventilkanal
- 20: Magnetventilsitz
- 21: Dosierscheibe
- 22: Ventilableitung
- 23: Abflußleitung

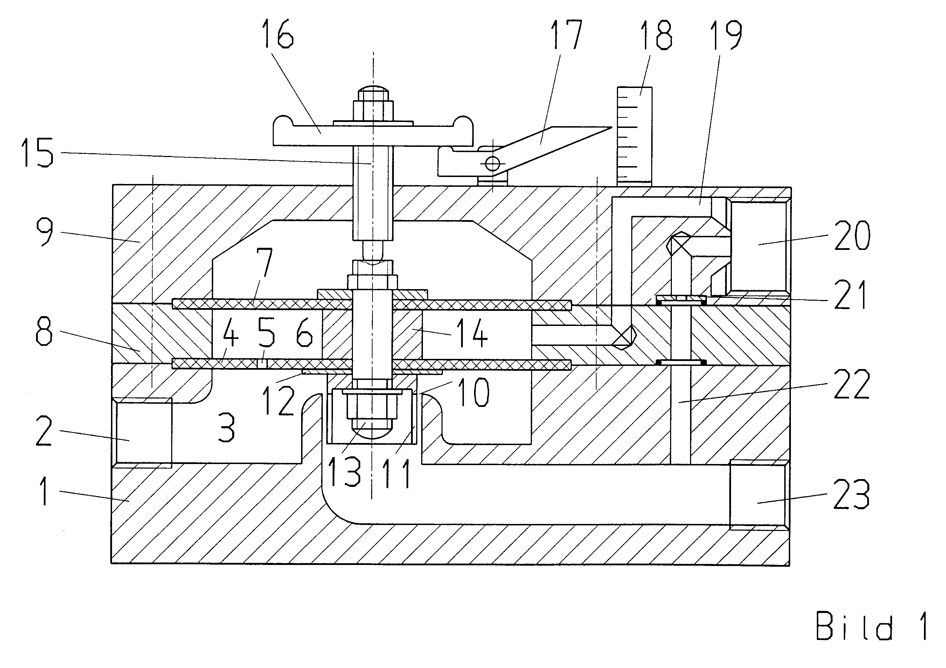

## Patentansprüche

1. Brennschneidmaschine mit Schneidbrenner, Zuführungsleitungen und Gassteuervorrichtung für Heizgas, Heizsauerstoff und Schneidsauerstoff, dadurch gekennzeichnet, daß mindestens in die mit Druckminderer oder Druckregler, Handabsperrventil, Filter, Manometern und Magnetabsperrventil als Steuereinheit ausgebildete Gassteuervorrichtung für Heizsauerstoff eine zusätzliche Einrichtung (1-23) für einen einstellbaren, dann aber gleichmäßigen Massenstrom bei sich verändernden Abflußbedingungen an einer Heiz- und Schneiddüse eingebaut ist.

2. Brennschneidmaschine nach Anspruch 1, dadurch gekennzeichent, daß eine nach dem Druckminderteil der Steuereinheit und vor dem Magnetabsperrventil angeordneter Massenstromhahn (1-23) zur Mengensteuerung für große Druckdifferenz mit nach oben begrenzter Selbsteinstellung die Mengenstromeinstellung und die Mengenstromgleichmäßigkeit erzeugt.

3. Brennschneidmaschine nach einem der Ansprüche 1 und 2, dadurch gekennzeichnet, daß die Steuereinheit für den Schneidsauerstoff einen direkten Ausgang hinter dem Druckminderteil besitzt, für einen Teil dieses Mediums jedoch einen zweiten Durchgang durch einen angebauten Massenstromhahn (1-23) zur Erzeugung einen gleichmäßigen Mengenstroms niedrigeren Druckes zur Verwendung als Heizsauerstoff.

4. Brennschneidmaschine nach einem der Ansprüche 1 bis 3, dadurch gekennzeichnet, daß ein weiterer angebauter Massenstromhahn (1-23) für die Versorgung der Düse mit einem ständigen, sehr geringen Heizsauerstoffzufluß zur Versorgung einer ständig brennenden Sicherheits- und Zündflamme bestimmt ist.

5. Brennschneidmaschine nach einem der Ansprüche 1 bis 4, dadurch gekennzeichnet, daß die Versorgung der Düse mit Heizgas ebenfalls mittels einer entsprechenden mit Massenstromhahn (1-23) ausgestatteten Steuereinheit erfolgt.

6. Brennschneidmaschine nach einem der Ansprüche 1 bis 5, dadurch gekennzeichnet, daß der Massenstromhahn (1-23) aus einem austauschbaren, bestimmten, veränderbaren oder festen Hahnstück (11) besteht und zur Einstellung bzw. zur Abschaltung an einer Hahnmembrane (4) sitzt.

7. Brennschneidmaschine nach einem der Ansprüche 1 bis 6, dadurch gekennzeichnet, daß die Steuereinheit für Schneid- und Heizsauerstoff mit und die für Heizgas ohne Massenstromhahn (1-23) ausgeführt ist.

## Claims

1. Torch-cutting machine with a controlled supply of a gas mass flow to the cutting torch defined by that at least the gas control device for heating oxygen designed as a control unit with pressure reducer or pressure regulator, hand shut-off valve, filter, manometers and solenoid shut-off valves in which an additional device (1-23) for an adjustable, but then steady mass flow with changing outlet conditions is built in.

2. Torch-cutting machine with a controlled supply of a gas mass flow to the cutting torch as per claim 1 defined by a mass flow valve (1-23) situated behind the pressure reducer part of the control unit and before the solenoid shut-off valve, produces mass flow adjustment and mass flow steadiness for rate control for great pressure differences with self adjustment limited towards the top.

3. Torch-cutting machine with a controlled supply of a gas mass flow to the cutting torch as per one of the claims 1 and 2 defined by that the control unit for the cutting oxygen has a direct exit behind the pressure reducer part, however, for a part of this media it has a second passage through an attached mass flow valve (1 - 23) for producing a steady mass flow of lower pressure to be used as heating oxygen.

4. Torch-cutting machine with a controlled supply of a gas mass flow to the cutting torch as per one of the claims 1 to 3 defined by that another attached mass flow valve (1-23) for the supply of the nozzle with a steady, very low flow of heating oxygen is determined to supply a steady burning safety- and ignition flame.

5. Torch-cutting machine with a controlled supply of a gas mass flow to the cutting torch as per one of the claims 1 to 4 defined by that the supply of the nozzle with heating gas is also procecuted by a corresponding control unit equipped with a mass flow valve (1-23).

6. Torch-cutting machine with a controlled supply of a gas mass flow to the cutting torch as per one of the claims 1 to 5 defined by that the mass flow valve (1-23) consists of a replaceable, certain, changeable or stationary valve piece (11) and that it is situated at a valve membrane (4) for adjusting or switching-off.

7. Torch-cutting machine with a controlled supply of a gas mass flow to the cutting torch as per one of the claims 1 to 6 defined by that the control unit for cutting- and heating oxygen is designed with and the one for heating gas is equipped without mass flow valve (1-23).

## Revendications

1. Machine d'oxycoupage avec chalumeau, conduites d'alimentation et dispositif de commande des gaz pour gaz de chauffe, oxygène de chauffe et oxygène de coupe, caractérisée en ce que, au moins au niveau du dispositif de commande de l'oxygène de chauffe, déjà par ailleurs équipé avec détendeur ou régulateur de pression, vanne d'arrêt manuelle, filtre, manomètres et électrovanne réunis en une même unité, est installé un équipement supplémentaire assurant un débit massique, ajustable mais cependant régulier indépendamment des conditions d'évacuation des gaz dans une buse de chauffage ou d'oxycoupage.

2. Machine d'oxycoupage selon la revendication 1, caractérisée en ce qu'une vanne de débit massique (1-23), installée entre le dispositif de détente de l'unité de commande et l'électrovanne, assure le réglage et la stabilité du débit massique dans le cadre d'une commande de débit massique pour de grosses différences de pression avec autorégulation de la pression maximale.

3. Machine d'oxycoupage selon l'une des revendications 1 et 2, caractérisée en ce que l'unité de commande pour l'oxygène de coupe possède sous le dispositif de détente une sortie directe pour une partie du fluide qui passe toutefois dans une vanne de débit massique (1-23) accolée pour fournir un flux massique régulier basse pression servant en tant qu'oxygène de chauffe.

4. Machine d'oxycoupage selon l'une des revendications 1 à 3, caractérisée en ce qu'une autre vanne de débit massique (1-23) accolée sert à l'alimentation de la buse en un flux constant et très léger d'oxygène de chauffe approvisionnant une veilleuse permanente de sécurité.

5. Machine d'oxycoupage selon l'une des revendications 1 à 4, caracterisée en ce que l'alimentation de la buse en gaz de chauffe est réalisé de la même manière grâce à une unité de commande correspondante équipée d'une vanne de débit massique (1 - 23).

6. Machine d'oxycoupage selon l'une des revendications 1 à 5, caractérisée en ce que la vanne de débit massique (1-23) se compose d'un boisseau de vanne (11) échangeable, adapté, modifiable ou fixe, et repose sur une membrane de vanne (4) pour assurer le réglage respectivement la fermeture de la conduite.

7. Machine d'oxycoupage selon l'une des revendications 1 à 6, caractérisée en ce que l'unité de commande pour oxygène de coupe et oxygène de chauffe, respectivement celle pour gaz de chauffe, est conçue avec, respectivement sans, la vanne de débit massique (1-23).
